Europäisches Patentamt

(19) European Patent Office   ·⑪ Publication number: **0 032 443**

Office européen des brevets   **B1**

(12) **EUROPEAN PATENT SPECIFICATION**

(45) Date of publication of patent specification: **05.06.85**   (51) Int. Cl.⁴: **B 29 D 11/00, C 08 F 246/00, G 02 C 7/04**

(21) Application number: **81300095.7**

(22) Date of filing: **09.01.81**

(54) Cross-linked polymers for contact lenses.

(30) Priority: **10.01.80 GB 8000809**

(43) Date of publication of application:
**22.07.81 Bulletin 81/29**

(45) Publication of the grant of the patent:
**05.06.85 Bulletin 85/23**

(84) Designated Contracting States:
**AT BE CH DE FR GB IT LI NL SE**

(56) References cited:
**GB-A-1 548 158**
**US-A-3 634 366**
**US-A-3 926 756**
**US-A-4 041 020**
**US-A-4 071 650**
**US-A-4 172 177**
**US-A-4 212 782**
**US-A-4 218 554**

(73) Proprietor: **CooperVision Inc.**
**75 Willow Road**
**Menlo Park California 94025 (US)**

(72) Inventor: **Atkinson, Ivor B.**
**32 Mount Road**
**Chessington Surrey (GB)**
Inventor: **Blackley, David C.**
**100 Berkeley Avenue**
**Chesham, Bucks (GB)**
Inventor: **Holdstock, Barry C.**
**67 Northway**
**Morden Surrey (GB)**
Inventor: **Knowlton, John L.**
**5 Lexby Road**
**Totton Hampshire (GB)**

(74) Representative: **Woodcraft, David Charles et al**
**BROOKES & MARTIN High Holborn House 52/54**
**High Holborn**
**London, WC1V 6SE (GB)**

Courier Press, Leamington Spa, England.

**Description**

The present invention relates to hydrophilic polymers having ionic cross-linkages, contact lenses formed therefrom and a process for their preparation.

Background of the invention

Cross-linking of polymers is well-known in the art for providing polymers with desirable properties, in particular desirable mechanical properties such as high tensile strength. Cross-linking is usually effected by use of a covalent cross-linking agent which bridges two or more polymer chains linking them together by covalent bonding. Cross-linking can also be effected by means of electrovalent interactions involving ionized sites in neighbouring polymer chains; cross-links induced in this way are known as ionic cross-links. This form of cross-linking is illustrated by ionomer resins which are ethylene copolymers containing pendant carboxylic acid groups and an associated bivalent metal cation and also by polyelectrolyte complexes which consist of an essentially neutralized mixture of polycations (e.g. a polyquaternary ammonium compound and a polyanion such as poly(vinyl sulfonic acid).

Cross-linking of hydrophilic polymers for use as contact lens materials is often a practical necessity in order that the material has adequate mechanical properties in the hydrated state. Covalent cross-linkage has been widely used for this purpose but ionic cross-linking has not hitherto been used. Ionic cross-linking requiring the presence of a bivalent metal cation is not acceptable for contact lens material since in use the bivalent cations are largely leached from the polymer by tear fluid and replaced by sodium and potassium ions contained in the tear fluid; polyelectrolyte complexes are unsuitable since they cannot conveniently be prepared in a form suitable for machining on a lathe.

Brief description of the invention

According to one aspect of the invention, there is provided a novel polymer for use as a contact lens material and comprised of chains in each of which there are both cationic and anionic sites participating in electrovalent cross-linkage of the chains one to another, the aforesaid sites being provided by moieties of the polymer chains which are resistant to loss of polarity by contact with tear fluids.

In a more specific embodiment the invention provides a contact lens which comprises a hydrophilic polymer of at least one hydrophilic vinyl or vinylidene monomer, a minor proportion of a cationic group — containing monomer and a minor proportion of an anionic group — containing monomer and said ionic group — containing monomers providing cationic and anionic sites for ionic cross-linkages between polymer chains.

The moieties providing the ionic sites will usually be organic moieties polymerized into the polymer chains and in general such organic moities will be units of monomer material copolymerized into a backbone polymer. The monomer material may, for example, be an alkyl amino alkyl acrylate or methacrylate, such as dimethylaminoethylmethacrylate, t-butylaminoethylmethacrylate or di-n-butylaminoethylmethacrylate, in the case of monomer material providing cationic sites. Conveniently methacrylic or acrylic acid may be employed to provide anionic sites although other polymerizable carboxylic acids may be used. Alternatively, however, such other cationic and anionic moities as quaternary ammonium compounds and unsaturated sulfonic acids may be employed to provide the cationic and anionic sites although, it should be noted, particularly in the case of relatively strongly ionizing groups, that there may be difficulties as regards availability of materials. Vinyl sulfonic acid, styrene sulfonic acid and unsaturated phosphoric acid monomers are however, obtainable.

The polymers of the invention will normally contain the ionic moities in a comparatively minor proportion together with a balance of polymerized essentially non-ionic monomer material. The balance may, for example, be made up of polymerized hydrophilic monomer such as an hydroxy alkyl acrylate or methacrylate, e.g. 2-hydroxyethylmethacrylate or N-vinylpyrrolidone and/or a polymerized hydrophobic mononer, such as an alkyl acrylate or methacrylate or styrene or a substituted styrene. Typical hydrophobic monomers are methyl methacrylate and n-butyl methacrylate.

Copolymers of 2-hydroxyethylmethacrylate with dimethylaminoethylmethacrylate, methacrylic acid and optionally styrene have been found to be especially suitable for use as soft contact lens material.

The anionic moities may be present in substantially stoichiometrically equivalent amounts, but, if desired, one ionic moiety may be in stoichiometric excess. For example, a stoichiometric excess of the anionic moiety provides a powerful hydration mechanism in the alkaline environment of the eye so that in most instances such an excess will be considered desirable. In such cases, where the ionic groups are in excess they are preferably neutralised by treatment of the final polymer with a mildly alkaline solution as described in British Patent No. 1,548,158.

As indicated earlier, the ionic moiities will in general be present in relatively minor proportions. Generally the proportion of ionic moieties available for participation in electrovalent linkage will be in the range from 5% to 20% by weight, preferably 7% to 20% (e.g. from 7% to 17% by weight). In all cases, the percentages stated are by weight of the whole unhydrated polymer.

Polymers according to the invention can conveniently be made by polymerizing a monomer mixture comprising components of identity and content appropriate to the desired polymer, the polymerization being effected using, for example, azobisisobutyronitrile as initiator. Other initiators may alternatively be

# 0 032 443

employed although peroxide initiators are not at present recommended since they have been found to produce dark coloured polymers.

The polymers of the invention have been found, as will be appreciated from the Examples which follow, to exhibit good mechanical properties. This is thought to be a result of the labile character of the electrovalent cross-linkage forces which results in the polymeric material being able to yield locally to applied stress. The polymers of the invention may, in addition to cross-linkages as a result of electrovalency, contain covalent cross-linkages as a result of use, if desired, of a covalent cross-linking agent, and results in polymers having even better mechanical properties. Covalent cross-linkages may be incorporated in the polymers by including a di- or poly-functional cross-linking agent, such as glycol dimethacrylates or acrylates, allyl methacrylate or acrylate or triallyl cyanurate.

The polymer of the invention can readily be cast to form a lens or lens blank. Lens blanks can be machined in known manner to form contact lenses of desired configuration. Lenses made in this way from hydrophilic monomer-derived polymers can be hydrated to equilibrium after machining using saline solution as described, for example, in British Patent No. 1,548,158.

The invention includes within its scope lenses, blanks and machined lenses as just described and in particular includes such lenses and lens blanks made of polymer comprising the following polymerized monomer units in the following proportions by weight:—

| | |
|---|---|
| 2-hydroxyethylmethacrylate: (2-HEMA) | 24 parts |
| dimethylaminoethylmethacrylate: (DMAEMA) | from 1 to 2.25 parts |
| methacrylic acid: (MA) | from 1 to 3 parts |
| styrene: | up to 2.5 parts |

The following specific Examples are intended to illustrate the invention.

Examples 1 to 5

Polymers were prepared according to the formulations given in Table 1. 2-hydroxyethylmethacrylate (2-HEMA) with a very low (0.05 wt %) ethylene glycol dimethacrylate (EGDM) content was used and hence the polymer was expected to contain a very low concentration of derived covalent cross-links. The monomer mixtures were polymerized by thoroughly mixing together purified 2-HEMA, redistilled MA, DMAEMA and (where stated styrene) in the proportions stated in Table 1 using the stated quantity of azodiisobutyronitrile (AZDN) as free radical generator. Polymerization was carried out in polythene tubes at 65°C for 16 hours, followed by curing for 3 hours at 100°C. In the case of comparison Examples 1 and 3, the DMAEMA was omitted, as indicated.

The rods obtained were cut into lens blanks, machined to form lenses, extracted and hydrated to equilibrium in a saline solution buffered at pH 7.4. The properties were then determined and the results are presented in Table 2. It can be seen that polymers of high tensile strength, as judged by the burst test, can be prepared even in the apparent absence of covalent cross-links.

This observation and the fact that the water content of the gels containing DMAEMA are somewhat lower than those without, in spite of the hydrophilic nature of DMAEMA and twice the addition of methacrylic acid, provides convincing evidence that hydrogels which contain minor proportions of cationic and anionic sites contain physically-effective cross-links attributable to the simultaneous presence of both types of ionic site.

TABLE 1

| | 1 | 2 | 3 | 4 | 5 |
|---|---|---|---|---|---|
| 2-HEMA (purified) (g) | 24.00 | 24.00 | 24.00 | 24.00 | 24.00 |
| DMAEMA (g) | 0.00 | 1.23 | 0.00 | 2.00 | 2.00 |
| Methacrylic Acid (g) | 0.68 | 1.20* | 1.77 | 2.09* | 2.86* |
| Styrene (g) | 0.00 | 0.00 | 2.05 | 2.05 | 2.05 |
| AZDN (g) | 0.02 | 0.02 | 0.03 | 0.03 | 0.03 |

*stoichiometric excess with respect to the amount of dimethylaminoethylmethacrylate (DMAEMA).

3

# 0 032 443

TABLE 2

| Example No. | Extractable content (% w/w) | Water content (% w/w) | Swell (%) | Burst pressure/ lens thickness |
|---|---|---|---|---|
| 1 (comparison) | 6.3 | 64 | 46 | 8 psi/0.21 mm ($55 \times 10^3$ Pa/0.21 mm) |
| 2 | 7.9 | 59 | 35 | 16 psi/0.20 mm ($110 \times 10^3$ Pa/0.21 mm) |
| 3 (comparison) | 5.5 | 71 | 55 | 8 psi/0.23 mm ($55 \times 10^3$ Pa/0.23 mm) |
| 4 | 11.5 | 55 | 32 | 19 psi/0.20 mm ($131 \times 10^3$ Pa/0.2 mm) |
| 5 | 8.8 | 64 | 42 | 15 psi/0.21 mm ($104 \times 10^3$ Pa/0.21 mm) |

**Claims**

1. A polymeric contact lens comprising a polymer formed by addition polymerization of a mixture comprising at least one hydrophilic, ethylenically-unsaturated monomer, an ethylenically-unsaturated monomer containing a cationic group and an ethylenically-unsaturated monomer containing an anionic group, said cationic and anionic groups forming ionic cross-linkages whereby the lens exhibits improved burst strength as compared with a similar lens containing no ionic cross-linkages, wherein said monomers containing cationic groups and anionic groups constitute a minor proportion of the polymerization mixture.

2. A contact lens according to claim 1 wherein the monomer containing a cationic group is a vinyl or vinylidene monomer having an amino group or quaternary ammonium group.

3. A contact lens according to claim 2 wherein the vinyl or vinylidene monomer is an alkyl amino alkyl acrylate or methacrylate.

4. A contact lens according to any one of the preceding claims wherein the monomer containing an anionic group is a vinyl or vinylidene monomer having a carboxylic or sulfonic acid group.

5. A contact lens according to claim 1 which comprises a polymer of a hydrophilic vinyl or vinylidene monomer containing a single center of unsaturation, a cationic vinyl or vinylidene monomer having alkyl amino or quaternary ammonium cationic groups and an anionic vinyl or vinylidene monomer having carboxylic or sulfonic acid anionic groups, said cationic and anionic groups constituting pendant or terminal groups in the polymer which interact to form ionic cross-linkages.

6. A contact lens according to claim 5 wherein the anionic monomer is present in the polymer in stoichiometric excess with respect to the cationic monomer.

7. A contact lens according to claim 5 or claim 6 wherein the cationic and anionic monomers are present in the polymer in a total amount of from 5 to 20% by weight.

8. A contact lens according to any one of claims 5 to 7 wherein the polymer also contains covalent cross-linkages derived from cross-linking monomers containing at least two centers of unsaturation.

9. A contact lens according to any one of claims 5 to 8 wherein the polymer is an addition polymer of at least one hydrophilic monomer and at least one hydrophobic monomer.

10. A contact lens which comprises a polymeric hydrogel which is the hydrated polymerized product of a monomer mixture comprising a minor proportion by weight of vinyl or vinylidene monomers containing cationic and anionic groups and a major proportion of polymerizable monomer having a single center of unsaturation, said monomer mixture including sufficient hydrophilic monomer to render the resultant polymer hydrophilic and the monomers containing cationic and anionic groups being effective in forming ionic cross-linkages in the resultant polymer.

11. A hydrophilic polymer which comprises an addition polymer of at least one hydrophilic vinyl or vinylidene monomer, a minor proportion by weight of a copolymerizable monomer containing anionic groups and a minor proportion by weight of a copolymerizable monomer containing cationic groups, the anionic and cationic groups forming ionic cross-linkages.

12. A method of preparing a hydrophilic copolymer containing ionic cross-linkages which comprises subjecting to polymerization in the presence of a free-radical initiator a monomer mixture comprising at least one hydrophilic vinyl or vinylidene monomer containing a single center of unsaturation, a vinyl or vinylidene monomer containing a cationic group and a vinyl or vinylidene monomer containing anionic groups.

4

## 0 032 443

### Patentansprüche

1. Polymere Kontaktlinse, die ein Polymeres umfaßt, das durch Additionspolymerisation einer Mischung gebildet wurde, die wenigstens ein hydrophiles, ethylenisch ungesättigtes Monomeres, ein ethylenisch ungesättigtes Monomeres, das eine kationische Gruppe enthält, sowie ein ethylenisch ungesättigtes Monomeres, das eine anionische Gruppe enthält, umfaßt, wobei die kationischen und anionischen Gruppen ionische Quervernetzungen bilden, wodurch die Linse eine verbesserte Berstfestigkeit verglichen mit einer ähnlichen Linse, die keine ionischen Quervernetzungen aufweist, zeigt, worin die genannten Monomeren mit kationischen Gruppen und anionischen Gruppen einen geringen Anteil der Polymerisationsmischung bilden.

2. Kontaktlinse nach Anspruch 1, bei der das Monomere, das eine kationische Gruppe enthält, ein Vinyl- oder Vinyliden-Monomeres mit einer Aminogruppe oder einer quaternären Ammoniumgruppe ist.

3. Kontaktlinse nach Anspruch 2, bei der das Vinyl- oder Vinyliden-Monomere ein Alkylaminoalkylacrylat oder -methacrylat ist.

4. Kontaktlinse nach irgendeinem der vorausgehenden Ansprüche, bei der das Monomere, das eine anionische Gruppe enthält, ein Vinyl- oder Vinyliden-Monomeres mit einer Carboxyl- oder Sulfonsäure-Gruppe ist.

5. Kontaktlinse nach Anspruch 1, die ein Polymeres aus einem hydrophilen Vinyl- oder Vinyliden-Monomeren mit einem einzigen ungesättigten Zentrum, einem kationischen Vinyl- oder Vinyliden-Monomeren mit Alkylamino- oder quaternären Ammonium-Kationengruppen und einem anionischen Vinyl- oder Vinyliden-Monomeren mit Carboxyl- oder Sulfonsäure-Anionengruppen umfaßt, wobei die Kationen- und Anionengruppen Seiten- oder End-Gruppen in der Polymeren bilden, die unter Bildung ionischer Quervernetzungen miteinander wechselwirken.

6. Kontaktlinse nach Anspruch 5, bei der das anionische Monomere in dem Polymeren im stöchiometrischen Überschuß über das kationische Monomere vorliegt.

7. Kontaktlinse nach Anspruch 5 oder Anspruch 6, bei der die kationischen und anionischen Monomeren in dem Polymeren in einer Gesamtmenge von 5 bis 20 Gew.-% vorliegen.

8. Kontantlinse nach irgendeinem der Ansprüche 5 bis 7, bei der das Polymere außerdem kovalente Quervernetzungen aufweist, die sich von vernetzenden Monomeren mit wenigstens zwei ungesättigten Zentren ableiten.

9. Kontaktlinse nach irgendeinem der Ansprüche 5 bis 8, bei der das Polymere ein Additionspolymeres aus wenigstens einem hydrophilen Monomeren und wenigstens einem hydrophoben Monomeren ist.

10. Kontaktlinse, die ein polymeres Hydrogel umfaßt, das das hydratisierte polymerisierte Produkt einer Monomermischung ist, die einen geringeren Gewichtsanteil von Vinyl- oder Vinyliden-Monomeren mit kationischen und anionischen Gruppen und einen Hauptanteil aus einem polymerisierbaren Monomeren mit einem einzigen ungesättigten Zentrum umfaßt, wobei die Monomermischung eine ausreichende Menge hydrophiles Monomeres enthält, um das erhaltene Polymere hydrophil zu machen, und wobei die Monomeren, die kationische und anionische Gruppen enthalten, im Hinblick auf eine Ausbildung ionischer Quervernetzungen in dem gebildeten Polymeren wirksam sind.

11. Hydrophiles Polymeres, das ein Additionspolymeres aus wenigstens einem hydrophilen Vinyl- oder Vinyliden-Monomeren, einem geringeren Gewichtsanteil eines copolymerisierbaren Monomeren mit anionischen Gruppen und einem geringeren Gewichtsanteil eines copolymerisierbaren Monomeren mit kationischen Gruppen umfaßt, wobei die anionischen und kationischen Gruppen ionische Quervernetzungen ausbilden.

12. Verfahren zur Herstellung eines hydrophilen Copolymeren, das ionische Quervernetzungen enthält, das das Polymerisieren einer Monomermischung, die wenigstens ein hydrophiles Vinyl- oder Vinyliden-Monomeres mit einem einzigen ungesättigten Zentrum, ein Vinyl- oder Vinyliden-Monomeres mit einer kationischen Gruppe und ein Vinyl- oder Vinyliden-Monomeres mit anionischen Gruppen umfaßt, in Gegenwart eines radikalischen Initiators umfaßt.

### Revendications

1. Verre de contact polymère comprenant un polymère formé par un polymérisation d'addition d'un mélange constitué d'au moins un monomère hydrophile, éthyléniquement insaturé, d'un monomère éthyléniquement insaturé contenant un groupe cationique et d'un monomère éthyléniquement insaturé contenant un groupe anionique, lesdits groupes cationique et anionique formant des réticulations ioniques, de sortie que le verre a une résistance à l'éclatement améliorée en comparaison d'un verre semblable ne contenant aucune réticulation ionique, caractérisé en ce que lesdits monomères contenant des groupes cationiques et des groupes anioniques constituent une proportion mineure du mélange de polymérisation.

2. Verre de contact selon la revendication 1, caractérisé en ce que le monomère contenant un groupe cationique est un monomère vinylique ou de vinylidène présentant un groupe amino ou un groupe ammonium quaternaire.

3. Verre de contact selon la revendication 2, caractérisé en ce que le monomère vinylique ou de vinylidène est un acrylate ou méthacrylate d'alcoyl-amino-alcoyle.

**0 032 443**

4. Verre de contact selon l'une quelconque des revendications 1 à 3, caractérisé en ce que le monomère contenant un groupe anionique est un monomère vinylique ou de vinylidène présentant un groupe acide carboxylique ou sulfonique.

5. Verre de contact selon la revendication 1, caractérisé en ce qu'il comprend un polymère d'un monomère hydrophile, vinylique ou de vinylidène contenant un unique centre de non-saturation, un monomère cationique vinylique ou de vinylidène présentant des groupes cationiques alcoyl-amino ou ammonium quaternaire et un monomère anionique vinylique ou de vinylidène présentant des groupes anioniques acide carboxylique ou sulfonique, les groupes cationiques et anioniques constituant des groupes pendants ou terminaus dans le polymère, lesquels réagissent l'un sur l'autre pour former des réticulations ioniques.

6. Verre de contact selon la revendication 5, caractérisé en ce que le monomère anionique est présent dans le polymère en excès stoechiométrique par rapport au monomère cationique.

7. Verre de contact selon l'une quelconque des revendications 5 et 6, caractérisé en ce que les monomères cationiques et anioniques sont présents dans le polymère en une quantité totale de 5 à 20% en poids.

8. Verre de contact selon l'une quelconque des revendications 5 à 7, caractérisé en ce que le polymère contient également des réticulations covalentes dérivées des monomères de réticulation comprenant au moins deux centres de non-saturation.

9. Verre de contact selon l'une quelconque des revendications 5 à 8, caractérisé en ce que le polymère est un polymère d'addition d'au moins un monomère hydrophile et d'au moins un monomère hydrophobe.

10. Verre de contact, caractérisé en ce qu'il comprend un hydrogel polymère qui est le produit polymérisé hydraté d'un mélange monomère constitué d'une proportion mineure en poids de monomères vinyliques ou de vinylidène contenant des groupes cationiques et anioniques et d'une proportion majeure de monomère polymérisable présentant un unique centre de non-saturation, le mélange monomère renfermant du monomère hydrophile suffisant pour rendre le polymère résultant hydrophile et les monomères contenent les groupes cationiques et anioniques étant efficaces pour former des réticulations ioniques dans le polymère résultant.

11. Polymère hydrophile, caractérisé en ce qu'il comprend un polymère d'addition d'au moins un monomère hydrophile, vinylique ou de vinylidène, une proportion mineure en poids d'un monomère polymérisable contenant des groupes anioniques et une proportion mineure en poids d'un monomère copolymérisable contenant des groupes cationiques, les groups anioniques et cationiques formant des réticulations ioniques.

12. Procédé de préparation d'un copolymère hydrophile contenant des réticulations ioniques, caractérisé en ce qu'il consiste à soumettre à la polymérisation, en présence d'un générateur de radicaux libres, au moins un monomère hydrophile, vinylique ou de vinylidène contenant un unique centre de non-saturation, un monomère vinylique ou de vinylidène contenant un groupe cationique ou un monomère de vinylidène contenant des groupes anioniques.

6